# EUROPÄISCHE PATENTANMELDUNG

(11) **EP 1 930 567 A2**
(43) Veröffentlichungstag der Anmeldung: **11.06.2008**
(21) Anmeldenummer: 07021760.9
(22) Anmeldetag: 09.11.2007
(51) Int. Cl.: F02C 6/18, F01D 25/24

(54) **Turbinengenerator und Verfahren zur Erzeugung elektrischer Energie sowie industrielle Anlage**

(30) Priorität: 01.12.2006 DE 202006018288 U
(71) Anmelder: DEPRAG Schulz GmbH u. Co., 92224 Amberg (DE)
(72) Erfinder: Pfeiffer, Rolf, 92224 Amberg (DE); Zinn, Gerd, 92242 Hirschau (DE)
(74) Vertreter: Dörr, Matthias

(57) **Zusammenfassung**

Um die Restenergie in bisher ungenutzten Restgasen industrieller Anlagen in elektrische Energie effizient umsetzen zu können, ist der Turbinengenerator (2) vorgesehen. Dieser ist als eine kompakte, einfache Einheit aufgebaut, bei der in einem gemeinsamen Gehäuse ein Generator (8) sowie ein Gasturbinenrad (14) angeordnet sind. Die beiden Teile sind gemeinsam auf einer Generatorwelle (10) angeordnet. Der Turbinengenerator (2) ist für Drehzahlen im Bereich zwischen 30.000 und 85.000 U/min für Restgasdrücke bis zu maximal 10 bar ausgelegt.

## Beschreibung

Die Erfindung betrifft einen Turbinengenerator und ein Verfahren zur Erzeugung von elektrischer Energie sowie eine industrielle Anlage mit einem derartigen Turbinengenerator.

In industriellen Anlagen, insbesondere Produktionsanlagen, werden regelmäßig Gase als Prozessgase oder als Betriebsmittel verwendet. Die verbrauchten Gase oder auch Abgase fallen am Ende des industriellen Prozesses als Restgase an, die für keine weitere Benutzung herangezogen werden. Unter Restgasen werden daher derartige verbrauchte Gase verstanden, die in heutigen industriellen Anlagen ungenutzt beispielsweise an die Umgebung abgegeben werden. Derartige Restgase sind beispielsweise nicht mehr benötigte Druckluft, nachdem diese beispielsweise zur Ansteuerung von Maschinen, Ventilen etc. eingesetzt wurde. Auch andere Prozessgase, die nach ihrer Verwendung in der industriellen Anlage nicht mehr benötigt werden, werden als Restgase bezeichnet.

Typischerweise weisen diese Restgase einen Restdruck im Bereich bis maximal 10⁶ Pa (10 bar) auf. Ergänzend hierzu können die Restgase auch hohe Temperaturen aufweisen. Mithin enthalten diese üblicherweise an die Umgebung abgegebenen Restgase noch Energie, die ungenutzt bleibt. Der Grund hierfür ist darin zu sehen, dass mit den heute verfügbaren Mitteln der Aufwand zur Ausnutzung der verbleibenden Restenergie der Restgase sehr hoch ist. Denn im Vergleich zu den üblicherweise zur Energiegewinnung eingesetzten Fluiden, wie überhitzter Wasserdampf unter sehr hohem Druck, weisen die Restgase eine viel kleinere Energiedichte auf.

Der Erfindung liegt die Aufgabe zugrunde, eine kostengünstige und betriebswirtschaftlich sinnvolle Verwertung von im Restgas enthaltenen Restenergien zu ermöglichen.

Die Aufgabe wird gemäß der Erfindung gelöst durch einen Turbinengenerator mit den Merkmalen des Anspruchs 1. Der Turbinengenerator weist einen Generator zur Erzeugung von elektrischer Energie mit einer Leistung< 50kW, bevorzugt < 20kW, und insbesondere mit einer Leistung im Bereich zwischen 5 und 20kW, auf. Daneben weist der Turbinengenerator ein nach Art einer Entspannungsturbine ausgebildetes Gasturbinenrad auf, welches über ein zugeführtes Restgas antreibbar ist. Der Generator sowie das Gasturbinenrad, welches auch als Schaufelrad bezeichnet wird, sind gemeinsam in einem Gehäuse und zudem auch gemeinsam auf einer Generatorwelle angeordnet. Die Generatorwelle ist hierbei einstückig ausgebildet, so dass eine drehfeste Verbindung zwischen dem Gasturbinenrad und dem Generator geschaffen ist.

Insgesamt ist hierdurch, nämlich speziell durch die Leistungsbegrenzung auf < 50kW, der Integration in einem gemeinsamen Gehäuse sowie der Anordnung des Gasturbinenrads unmittelbar auf der Generatorwelle, eine Platz sparende, kompakte und insbesondere auch mobile Einheit geschaffen, die kostengünstig herstellbar ist und flexibel an unterschiedlichsten Orten einsetzbar ist. Insbesondere durch die unmittelbare Anordnung des Gasturbinenrads auf der Generatorwelle ist eine kompakte Ausgestaltung ermöglicht. Es ist daher keine eigene Welle für das Gasturbinenrad erforderlich und es sind keine zwei eigenständige Komponenten (Generator und Turbine) vorgesehen. Vielmehr ist der Turbinenteil unmittelbar mit dem Generatorteil verbunden, indem das Gasturbinenrad drehfest und ohne Kupplung oder dergleichen auf der Generatorwelle befestigt ist.

Um eine möglichst kompakte Ausgestaltung zu erreichen ist weiterhin in einer bevorzugten Ausgestaltung vorgesehen, dass das Gasturbinenrad stirnendseitig auf der Generatorwelle befestigt ist, ohne dass diese stirnendseitig auf der Seite des Gasturbinenrads gelagert ist. Das Gasturbinenrad ist daher auf einem freien Stirnende der Generatorwelle befestigt. Weiterhin ist zweckdienlicherweise vorgesehen, dass die Generatorwelle insgesamt durch nur zwei Lager gelagert ist, wobei diese beidseitig unmittelbar am Generator angeordnet sind. Das zweite Lager ist daher direkt zwischen dem Generator und dem Gasturbinenrad angeordnet.

Vorteilhafterweise sind dabei die beiden Lager innerhalb des Gehäuses angeordnet, so dass sich insgesamt eine abgeschlossene Baueinheit ergibt, bei der sämtliche Komponenten innerhalb des Gehäuses angeordnet sind.

Um eine effiziente Energieausnutzung für die Restgase zu ermöglichen, ist der Turbinengenerator gemäß einer bevorzugten Ausgestaltung für eine Betriebsdrehzahl von 30.000 bis 85.000 U/min ausgelegt. Im Betrieb wird daher der Turbinengenerator mit einer Drehzahl in diesem Bereich betrieben.

Zweckdienlicherweise weist das Gasturbinenrad einen Durchmesser < 130 mm, bevorzugt < 100 mm und insbesondere einen Durchmesser im Bereich zwischen 30 und 70 mm, auf. Ein derartig kleines Gasturbinenrad eignet sich vortrefflich zum einen um eine sehr kompakte Bauform zu erreichen und zum anderen um das Eigengewicht des Gasturbinenrads möglichst gering zu halten. Die bei den hohen Drehzahlen auftretenden Zentrifugalkräfte bleiben daher gering. Auch werden die vergleichsweise geringen im Restgas enthaltenen Restenergien effizient in die Bewegung des Gasturbinenrads umgesetzt.

Vorzugsweise ist hierbei der Turbinengenerator insgesamt für einen Restgasdruck des Restgases von maximal 10 bar vorgesehen. Insbesondere werden im Betrieb Restgase mit einem Restgasdruck von beispielsweise lediglich bis zu 6 bar eingesetzt. Als Restgas wird hierbei beispielsweise Druckluft oder auch andere Prozessgase oder Abgase aus beliebigen industriellen Prozessen eingesetzt.

Zweckdienlicherweise wird als Gasturbinenrad ein Druckluftturbinenrad eines Druckluftmotors für handgehaltene Werkzeugmaschinen, wie beispielsweise Druckluftschrauber etc., verwendet. Derartige druckluftbetätigte Werkzeugmaschinen werden heute vielfältig eingesetzt. Es wird daher auf bekanntes Know how zurückgegriffen, so dass insgesamt kostengünstige, bestehende Komponenten verwendet werden können. Auch sind derartige Druckluftturbinenräder speziell auf die Drücke ausgelegt, die nunmehr bei dem Turbinengenerator zur Erzeugung von elektrischer Energie herangezogen werden.

Zweckdienlicherweise ist das gemeinsame Gehäuse des Turbinengenerators zweiteilig aufgebaut und umfasst ein Grundgehäuse, welches von einem Turbinendeckel verschlossen ist. Im Grundgehäuse ist der Generator angeordnet und im Turbinendeckel läuft das Gasturbinenrad. Der Turbinendeckel bildet hierbei einen kreisscheibenartigen Strömungskanal aus, in dem das Gasturbinenrad im Betrieb rotiert. Sowohl das Grundgehäuse als auch der Turbinendeckel sind beispielsweise Spritzgussteile und entweder einstückig oder entlang einer Teilungsebene zweistückig ausgebildet.

Der Turbinendeckel weist einen Eintrittsstutzen sowie einen Austrittsstutzen für den Eintritt und den Austritt des Restgases auf, wobei beide Stutzen in den Strömungskanal münden. Die Stutzen sowie auch der Strömungskanal sind hierbei einstückige Teile des vorzugsweise gegossenen Turbinendeckels, d.h. die Innenkontur des Turbinendeckels und das Gasturbinenrad bilden den Strömungskanal aus. Zweckdienlicherweise ist in dem zumindest einen Eintrittsstutzen eine austauschbare Düse angeordnet. Die Düse ist hierbei auf das jeweils zu verwendende Restgas abgestimmt, um eine möglichst effiziente Energieausbeute zu erreichen. Die Düse ist hierbei derart ausgebildet, dass die im Restgas enthaltene Druckenergie in kinetische Energie umgewandelt wird. Die Düse ist beispielsweise nach Art einer Lavaldüse ausgebildet. Insgesamt bildet das Gasturbinenrad mit der Generatorwelle eine Entspannungsturbine, die die im Restgas enthaltene Energie (Druckenergie) durch Entspannung in Bewegungsenergie umsetzt. Durch die Austauschbarkeit der Düse kann der Turbinengenerator für unterschiedliche Einsatzzwecke (unterschiedliche Restgasarten, unterschiedliche Drücke, unterschiedliche Temperaturen) problemlos und einfach durch Austausch der Düsen eingestellt werden.

Vorzugsweise sind um den Umfang des Turbinendeckels verteilt mehrere Eintrittsstutzen mit Düsen angeordnet, um eine effiziente Energieausbeute und einen hohen Wirkungsgrad zu ermöglichen.

Insgesamt wird durch die hier beschriebenen Maßnahmen ein kompakter, anschlussfertiger Turbinengenerator erhalten, der bezogen auf den Energieinhalt des eingesetzten Restgases einen Gesamt-Wirkungsgrad von bis zu 70% erreicht, d.h. bis zu 70% der im Restgas enthaltenen Energie wird in elektrische Energie umgewandelt. Im Hinblick auf den kompakten Aufbau des Turbinengenerators weist dieser vorzugsweise lediglich ein Volumen von maximal bis 0,1 m³ und insbesondere von maximal bis etwa 0,05 m³ auf. Dies entspricht einem Quader mit einer Kantenlänge von etwa 0,5 bzw. von etwa 0,3 bis 0,4 m. Insbesondere ist der Turbinengenerator nicht größer als etwa ein üblicher Schuhkarton und weist beispielsweise ein im Wesentlichen zylindrisches Gehäuse mit einer Länge von 20 bis 30 cm und mit einem Durchmesser von etwa 10 cm auf. Durch diese kompakte Ausgestaltung ist der Turbinengenerator insgesamt tragbar und daher problemlos dezentral an unterschiedlichsten Orten einsetzbar.

Gemäß einer zweckdienlichen Weiterbildung ist eine Steuereinheit vorgesehen, die die Drehzahl des Generators und damit auch zugleich die des Gasturbinenrads steuert. Bevorzugt ist hierbei die Steuereinheit zur Regelung des Generators auf eine konstante Drehzahl ausgebildet. Dies wird insbesondere durch die Steuerung der vom Generator abgegriffenen Last erreicht, es erfolgt also eine Drehzahlregelung auf elektrischem Wege durch die Belastung des Generators. Zusätzliche Einbauten, beispielsweise ein Fliehkraftregler, zur Steuerung oder Regelung der Drehzahl sind nicht vorgesehen.

Die Erfindung wird weiterhin gelöst durch eine industrielle Anlage gemäß Anspruch 18 sowie durch ein Verfahren gemäß Anspruch 19, wobei jeweils ein derartiger Turbinengenerator zur Rückgewinnung der verbleibenden Restenergie im Restgas eingesetzt wird.

Prinzipiell lässt sich der Turbinengenerator auch zur Erzeugung von Energie aus anderen Gasen als Restgasen heranziehen und er lässt sich prinzipiell auch für höhere Leistungen auslegen.

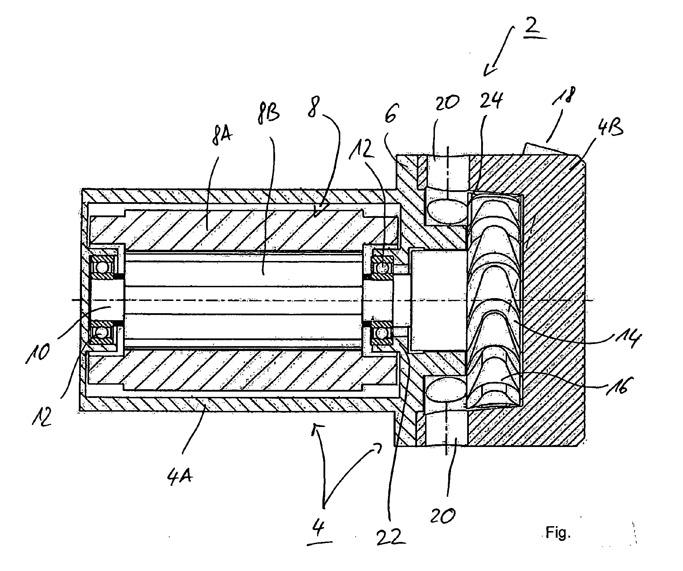

Ein Ausführungsbeispiel wird im Folgenden anhand der einzigen Figur näher erläutert. Diese zeigt in einer schematischen und vereinfachten Darstellung einen Turbinengenerator in einem Aufriss.

Der Turbinengenerator 2 weist ein Gehäuse 4 auf, das sich aus einem zylindrischen Grundgehäuse 4A und einem Turbinendeckel 4B zusammensetzt. Das Grundgehäuse 4A weist an seiner einen Stirnseite einen Flansch 6 auf, an dem der Turbinendeckel 4B in hier nicht näher dargestellter Art und Weise beispielsweise über Schrauben befestigt ist. Im Grundgehäuse 4A ist ein Generator 8 angeordnet, der einen Stator 8A sowie einen Rotor 8B umfasst. Der Rotor 8B ist auf einer Generatorwelle 10 befestigt. Zur Lagerung der Generatorwelle 10 sind insgesamt nur zwei Lager 12 vorgesehen, die jeweils unmittelbar angrenzend an den Rotor 8B angeordnet sind. Im Anschluss an das auf der rechten Bildseite dargestellte Lager 12 ist auf einem Freiende der Generatorwelle 10 ein Gasturbinenrad 14 befestigt. Und zwar ist hier eine starre und drehfeste Verbindung mit der insgesamt nach Art einer Stange ausgebildeten, einstückigen Generatorwelle 10 vorgesehen. Das Gasturbinenrad 14 weist Schaufeln 16 auf, über die ein Antrieb des Gasturbinenrads 14 und damit der Generatorwelle 10 ermöglicht ist.

Der Turbinendeckel 4B weist um den Umfang verteilt mehrere Eintrittsstutzen 18 sowie Austrittsstutzen 20 auf. In den Figuren ist nur ein Entrittsstutzen 18 zu entnehmen. In den Eintrittsstutzen 18 sind hier nicht näher dargestellte austauschbare Düsen angeordnet. Beim Einsatz sind die Eintrittsstutzen 18 an eine Restgasleitung angeschlossen, über die im Betrieb dem Turbinengenerator 2 ein Restgas, beispielsweise Druckluft mit einem Restgasdruck von maximal 10 bar, zugeführt wird.

Die Eintrittsstutzen 18 sind an einer Mantelfläche des ebenfalls zylindrischen Turbinendeckels 4B angeordnet und zwar auf der dem Generator 8 abgewandten Seite des Gasturbinenrads 14. Die Eintrittsstutzen 18 sind hierbei etwas schräg gestellt, um eine optimale Anströmung der Schaufeln 16 zu gewährleisten. Die Austrittsstutzen 20 sind auf der dem Generator 8 zugewandten Seite des Gasturbinenrads 14 an der Mantelfläche des Turbinendeckels 4B als Durchtrittsöffnung ausgebildet.

Die beiden Gehäuseteile 4A,4B sind insbesondere Guss- oder Spritzgussteile und weisen Innenkonturen auf, die derart ausgebildet sind, dass keine weiteren Halterungen etc. mehr erforderlich sind. So sind beispielsweise Halteringe 22 ausgeformt, in die die Lager 12 eingesetzt sind. Zugleich bilden die Halteringe 22 Abstützflächen für den Stator 8A. Die Innenkontur des Turbinendeckels 4B ist derart gewählt, dass sich ein kreisscheibenartiger Strömungskanal 24 bildet, in dem der Schaufelbereich des Gasturbinenrads 14 im Betrieb rotiert.

Der Generator 8 ist insgesamt zur Erzeugung einer elektrischen Leistung von maximal bis zu 20 kW vorgesehen und vorzugsweise lediglich im Bereich zwischen etwa 5 und 10 kW.

Der Turbinengenerator 2 weist insgesamt einen sehr kompakten Aufbau auf und hat etwa eine Länge von 20 bis 30 cm und einen Durchmesser (im Bereich des Turbinendeckels 4B gemessen) von etwa 10 cm. Das Gasturbinenrad 14 selbst hat typischerweise einen Durchmesser von maximal etwa bis zu 60 mm. Der gesamte Turbinengenerator 2 ist für Drehzahlen zwischen 30.000 und 85.000 U/min. ausgelegt. Abgesehen von den Lagern 12 sind alle weiteren Teile berührungslos angeordnet, so dass keine Reibung auftritt.

Zur Steuerung des Turbinengenerators 2 ist eine hier nicht näher dargestellte Steuereinheit vorgesehen. Diese regelt die Drehzahl insbesondere auf einen konstanten Wert ein, indem sie die Drehzahl des Generators 8 durch eine entsprechende elektrische Belastung des Generators 8 steuert. Insofern ist auch die Regelung und Steuerung sehr einfach gehalten und es sind keine weiteren mechanischen oder elektromechanischen Komponenten erforderlich. Vielmehr reicht es aus, dass der Generator 8 in üblicher und hier nicht näher dargestellter Weise elektrisch angeschlossen ist. Der Generator 8 ist hierbei vorzugsweise mit einem in der Steuerungseinheit integrierten Leistungsteil verbunden, in dem die durch die hohe Drehzahl erzeugte hochfrequente Wechselspannung beispielsweise in Gleichstrom umgewandelt und anschließend wieder in eine gewünschte Netzspannung transformiert wird. Die Steuereinheit mit der vorzugsweise darin integrierten Leistungseinheit ist vorzugsweise unmittelbar am Gehäuse 4 angeordnet, so dass insgesamt eine anschlussfertige Einheit vorliegt. Zur Inbetriebnahme ist lediglich erforderlich, dass am Eintrittsstutzen 18 eine Restgasleitung angeschlossen und am Austrittsstutzen 20 gegebenenfalls eine Auslassleitung angeschlossen wird. An der Steuereinheit wird dann unmittelbar der erzeugte Strom insbesondere in der gewünschten Spannung und Frequenz zur Verfügung gestellt.

Beim Betrieb des Turbinengenerators tritt das Restgas durch die in den Eintrittsstutzen 18 angeordneten Düsen in den Strömungskanal 24 ein. Beim Durchtritt durch die Düse wird hierbei das Restgas beschleunigt, so dass eine möglichst weitgehende Umwandlung der Druckenergie in kinetische Energie erfolgt. Das eingesetzte Restgas weist hierbei einen Druck von üblicherweise < 10 bar auf. Das Gas wird bis auf einen Enddruck im Bereich von 1 bis 2 bar entspannt. Sofern das Restgas zusätzlich auch noch eine thermische Restenergie aufweist, ist in einer alternativen Ausgestaltung vorgesehen, dass dem Turbinengenerator 2 eine Einheit vorgeschalten ist, die zunächst die thermische Energie des Restgases in Druckenergie umwandelt, bevor das Restgas den Eintrittsstutzen 18 zugeführt wird.

Insgesamt zeichnet sich der Turbinengenerator 2 durch einen sehr einfachen und kompakten und damit kostengünstigen Aufbau aus. Als Gasturbinenrad 14 wird hierbei insbesondere ein Turbinenrad eingesetzt, wie es üblicherweise bei handbetätigten, druckluftangetriebenen Motoren eingesetzt wird, beispielsweise bei Druckluftschleifmaschinen oder sonstigen handgehaltenen Klein-Werkzeugmaschinen. Weiterhin ist der Turbinengenerator 2 durch Austausch der Düsen auf unterschiedliche Gasarten, unterschiedliche Drücke oder auch unterschiedliche Temperaturen der Restgase problemlos einstell- und anpassbar. Auch kann der Turbinengenerator 2 auf unterschiedliche Restgas-Massenströme eingestellt werden, indem die Anzahl der Eintrittsstutzen 8 und der entsprechenden Düsen variiert wird. Dies geschieht beispielsweise dadurch, dass unterschiedliche Turbinendeckel 4B bevorratet werden, die je nach Einsatzzweck dann entsprechend auf das Grundgehäuse 4A aufgeschraubt werden. Die unterschiedlichen Turbinendeckel 4B unterscheiden sich hierbei in der Anzahl ihrer Eintrittsstutzen 18.
Ein weiterer Vorteil ist darin zu sehen, dass der Turbinengenerator insgesamt wartungsfrei ist, da keine sich einander berührende Teile eingesetzt werden. Lediglich die beiden Lager 12 weisen gegeneinander abrollende Teile auf.

Um das Gasturbinenrand 14 vor Beschädigungen zu schützen ist bei Bedarf vorgesehen, dass vor dem Eintrittsstutzen 18 noch ein Filter für das Restgas vorgeschaltet wird. Beispielsweise dient dieser Filter zur Abscheidung von Staubpartikeln oder Flüssigkeitströpfchen, die im Restgas mitgeführt werden.

Der Turbinengenerator 2 ist insgesamt für den Einsatz in einer industriellen Anlage vorgesehen, bei der das Restgas beispielsweise als Abfallprodukt, also insbesondere als verbrauchtes Betriebsmittel, anfällt. Bisher wird ein derartiges Restgas üblicherweise ungenutzt abgegeben. Durch den hier beschriebenen Turbinengenerator 2 besteht nunmehr die Möglichkeit, dezentral an den Orten, an denen das Restgas anfällt, unmittelbar und mit geringem Aufwand die im Restgas enthaltene Restenergie zu großen Teilen in elektrische Energie umzuwandeln. Gerade durch den sehr kompakten, einfachen und damit kostengünstigen Aufbau des Turbinengenerators ist hierbei auch eine hohe betriebswirtschaftliche Effizienz ermöglicht. Da es sich weiterhin um eine insgesamt anschlussfertige, vollständig funktionsfähige Einheit handelt, sind auch keine weitergehenden Installationen erforderlich.

### Bezugszeichenliste

- 2: Turbinengenerator
- 4: Gehäuse
- 4A: Grundgehäuse
- 4B: Turbinendeckel
- 6: Flansch
- 8: Generator
- 8A: Stator
- 8B: Rotor
- 10: Generatorwelle
- 12: Lager
- 14: Gasturbinenrad
- 16: Schaufel
- 18: Eintrittsstutzen
- 20: Austrittsstutzen
- 22: Halterung
- 24: Strömungskanal

## Patentansprüche

1. Turbinengenerator (2) zur Erzeugung von elektrischer Energie aus einem in einer industriellen Anlage anfallenden Restgas, bei dem in einem gemeinsamen Gehäuse (4) ein für eine Leistung < 50 kW, insbesondere für eine Leistung im Bereich von 5 bis 20 kW, ausgelegter Generator (8) sowie ein Gasturbinenrad (14) angeordnet sind, wobei das Gasturbinenrad (14) gemeinsam mit dem Generator (8) auf einer Generatorwelle (10) angeordnet ist.

2. Turbinengenerator (2) nach Anspruch 1,
bei dem das Gasturbinenrad (14) stirnendseitig auf der Generatorwelle (10) befestigt ist, ohne dass diese stirnendseitig gelagert ist.

3. Turbinengenerator (2) nach Anspruch 1 oder 2,
bei dem die Generatorwelle (10) in nur zwei Lagern (12) stirnendseitig am Generator (8) gelagert ist.

4. Turbinengenerator (2) nach einem der vorhergehenden Ansprüche,
bei dem zur Lagerung der Generatorwelle (10) vorgesehene Lager (12) im Gehäuse (4) angeordnet sind.

5. Turbinengenerator (2) nach einem der vorhergehenden Ansprüche, der für eine Betriebsdrehzahl von 30 000 bis 85 000 U/min ausgelegt ist.

6. Turbinengenerator (2) nach einem der vorhergehenden Ansprüche,
bei dem das Gasturbinenrad (14) einen Durchmesser kleiner 130 mm, insbesondere im Bereich von 30 bis 70 mm aufweist.

7. Turbinengenerator (2) nach einem der vorhergehenden Ansprüche,
der für einen Restgasdruck des Restgases von maximal 10⁶ Pa vorgesehen ist.

8. Turbinengenerator (2) nach einem der vorhergehenden Ansprüche,
bei dem als Gasturbinenrad (14) ein Druckluftturbinenrad eines Druckluftmotors für handgehaltene Werkzeugmaschinen eingesetzt ist.

9. Turbinengenerator (2) nach einem der vorhergehenden Ansprüche,
bei dem das gemeinsame Gehäuse (4) ein Teilgehäuse (4A) umfasst, in dem der Generator (8) angeordnet ist und das stirnendseitig von einem Turbinendeckel (4B) verschlossen ist, in dem das Gasturbinenrad (14) angeordnet ist.

10. Turbinengenerator (2) nach Anspruch 9,
bei dem der Turbinendeckel (4B) einen kreisscheibenartigen Strömungskanal (24) bildet, in dem das Gasturbinenrad (14) im Betrieb rotiert.

11. Turbinengenerator (2) nach Anspruch 9 oder 10,
bei dem einstückig am Turbinendeckel (4B) zumindest ein Eintrittsstutzen (18) sowie ein Austrittsstutzen (20) angeordnet sind.

12. Turbinengenerator (2) nach Anspruch 1,
bei dem im zumindest einen Eintrittsstutzen (18) eine austauschbare Düse angeordnet ist.

13. Turbinengenerator (2) nach einem der Ansprüche 9 bis 12,
bei dem um den Umfang des Turbinendeckeis (4B) verteilt mehrere Eintrittsstutzen (18) angeordnet sind.

14. Turbinengenerator (2) nach einem der vorhergehenden Ansprüche,
der ein Volumen von maximal bis 0,1 m³ und insbesondere von maximal 0,05 m³ einnimmt.

15. Turbinengenerator (2) nach einem der vorhergehenden Ansprüche, der tragbar ist.

16. Turbinengenerator (2) nach einem der vorhergehenden Ansprüche,
bei dem eine Steuereinheit vorgesehen ist, die die Drehzahl des Generators (8) und hierüber zugleich auch die des Gasturbinenrads (14) steuert.

17. Turbinengenerator (2) nach einem der vorhergehenden Ansprüche,
bei dem die Steuereinheit zur Regelung des Generators (8) auf eine konstante Drehzahl ausgebildet ist.

18. Industrielle Anlage, bei der als ein verbrauchtes Prozessmittel ein Restgas anfällt, welches über eine Restgasleitung einem Turbinengenerator (2)
nach einem der vorhergehenden Ansprüche zur Erzeugung von elektrischer Energie zuführbar ist.

19. Verfahren zur Erzeugung von elektrischer Energie aus einem in einer industriellen Anlage anfallenden Restgas mit Hilfe eines Turbinengenerators (2) nach einem der Ansprüche 1 bis 17.
